# EUROPEAN PATENT SPECIFICATION

(11) **EP 0 431 898 B1**
(45) Date of publication and mention of the grant of the patent: **05.03.1997**
(21) Application number: 90313162.1
(22) Date of filing: 04.12.1990
(51) Int. Cl.: G11B 15/68, G11B 23/087, G11B 15/61

(54) **Magnetic tape cassettes**
Magnetbandkassetten
Cassettes à bande magnétique

(30) Priority: 06.12.1989 JP 141175/89 U
(43) Date of publication of application: 12.06.1991
(73) Proprietor: SONY CORPORATION, Tokyo 141 (JP)
(72) Inventor: Tanaka, Masato, c/o Patents Division, Shinagawa-ku, Tokyo 141 (JP)
(74) Representative: Cotter, Ivan John

(56) References cited:
- EP-A- 0 159 591
- EP-A- 0 295 921
- DE-A- 2 145 822
- DE-A- 3 500 666
- US-A- 3 672 683
- US-A- 4 860 133

## Description

This invention relates to magnetic tape cassettes.

Extremely small magnetic tape cassettes have been proposed, which are smaller than the so-called compact cassette or microcassette currently available. Because the proposed tape cassettes are so small, there is the risk of them being lost, so it has been proposed that a plurality of these tape cassettes be accommodated within a cassette magazine.

Upon recording or reproduction, these tape cassettes are loaded onto a recording and reproducing apparatus while accommodated within the cassette magazine. In the recording and reproducing apparatus, a predetermined tape cassette is automatically taken out from the cassette magazine by a cassette changer of the apparatus, and the thus selected tape cassette is loaded on a driving mechanism section of the apparatus for recording and/or reproduction. However, such automatic extraction of a tape cassette from the cassette magazine, has proved difficult.

Patent specification EP-A-295921 discloses a tape cassette which can be loaded into a magazine and which has a groove in a lid of the cassette, the groove extending across the full width of the lid and being offset in the height of the lid so that when the cassette is inserted into a magazine the groove cooperates with a projection on the magazine such that wrong way round insertion is prevented. Concave portions are provided at the sides of the lid, in communication with the groove, to receive projections of a lid opening mechanism.

According to the invention there is provided a magnetic tape cassette which can be accommodated with a plurality of others in a cassette magazine wherein the tape cassette is formed with an opening at its front side so as to expose a tape and is provided with a rotatable lid which can open and close the opening; and
on a front surface of the lid, there is formed a guide groove extending along the lateral direction of the lid;
characterised in that the lid of the cassette has formed therein a plurality of concave changer member engaging portions each communicating with the guide groove, extending in a direction perpendicular to the longitudinal direction of the guide groove from one side of the guide groove toward an edge of the lid and spaced apart across the lateral width of the lid, whereby the tape cassette can be stepwise withdrawn from the cassette magazine by reciprocating a changer member by a small stroke a plurality of times, said changer member engaging portions being successively engaged by the cassette changer.

Embodiments of the invention can be applied to a variety of tape cassettes such as a PCM recording tape cassette, a video tape cassette, or a digital audio tape (DAT) cassette.

The invention will now be described by way of example with reference to the accompanying drawings, throughout which like parts are referred to by like references, and in which:
Figure 1 is a perspective view of an embodiment of magnetic tape cassette according to the present invention;
Figure 2 is a perspective view of the embodiment and a head drum;
Figure 3 is a plan view of a lower part side of the embodiment;
Figure 4 is a section through a cassette magazine;
Figure 5 is a schematic diagram of a cassette changer system; and
Figure 6 is a diagram used to explain an operation in which a cassette is taken from the cassette magazine.

The embodiment to be described forms a magnetic tape cassette of extremely small size.

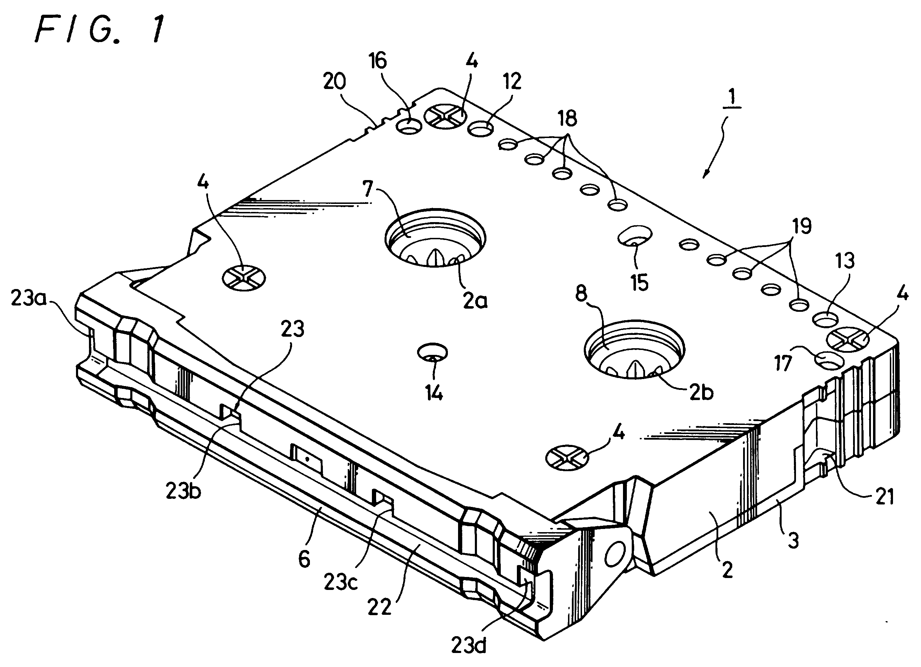

Referring to Figures 1 to 3, the tape cassette comprises a cassette casing 1 which accommodates therein a magnetic tape T on which a pulse code modulated (PCM) signal, for example, is recorded, and from which the recorded PCM signal is reproduced. The cassette casing 1 is formed of an upper half or upper part 2 and a lower half or lower part 3 fastened together by screws 4. A lid 6 is pivotally attached to the cassette casing 1 so as to open and close an opening 5 formed at the front surface side of the upper and lower parts 2 and 3.

The magnetic tape T accommodated within the cassette casing 1 is wrapped around a pair of reel hubs 7 and 8 provided in correspondence with hub drive shaft insertion apertures 2a, 2b and 3a, 3b. A portion of the tape T is exposed at the opening 5 where pinch rollers 9 and 10 serving as guide rollers are pivotally provided at respective sides of the opening 5 such that the tape T extends between the guide rollers 9 and 10.

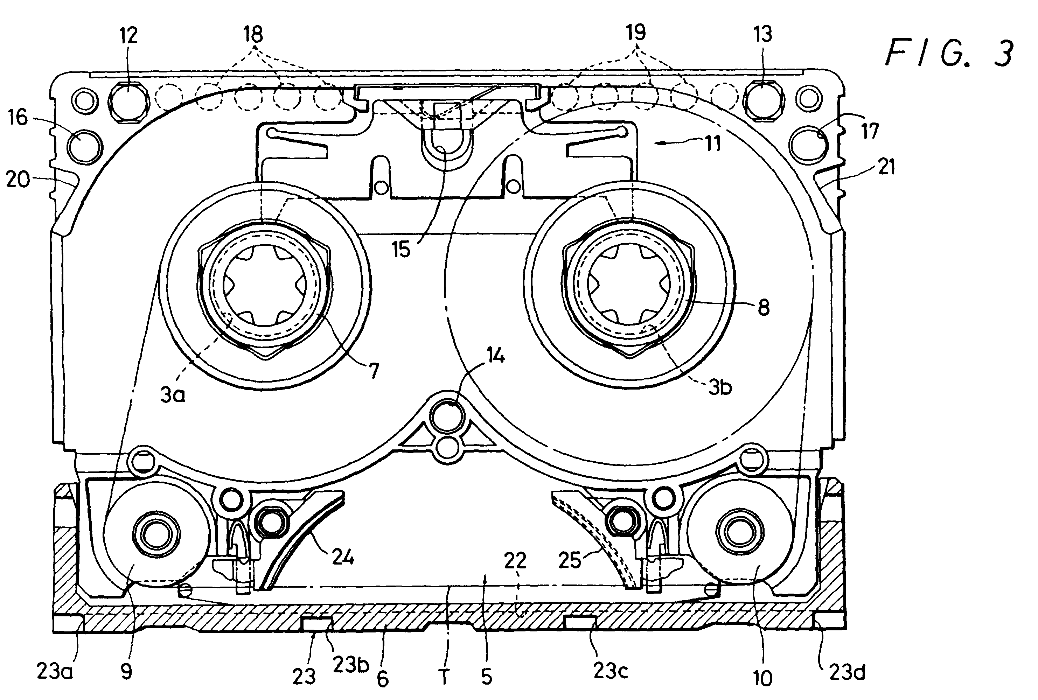

As shown in Figure 3, a braking mechanism 11 is provided within the cassette casing 1 to brake the two hubs 7 and 8 when the tape cassette is not in use. Mis-erase preventing mechanisms 12 and 13 are provided in the upper and lower surface sides of the cassette casing 1 at its two rear corner portions so as to communicate with the upper and lower parts 2 and 3. Positioning reference apertures 14, 15 and 16, 17 are respectively formed through the cassette casing 1 at its front and back positions in the front to back direction and its front and back positions in the front to back direction and at its two rear side portions in the lateral direction. A plurality of predetermined detection apertures 18 and 19 are formed through the cassette casing 1 at its rear edge portion in the lateral direction. Grip portions 20 and 21 are formed on the rear portions of two side walls of the cassette casing 1.

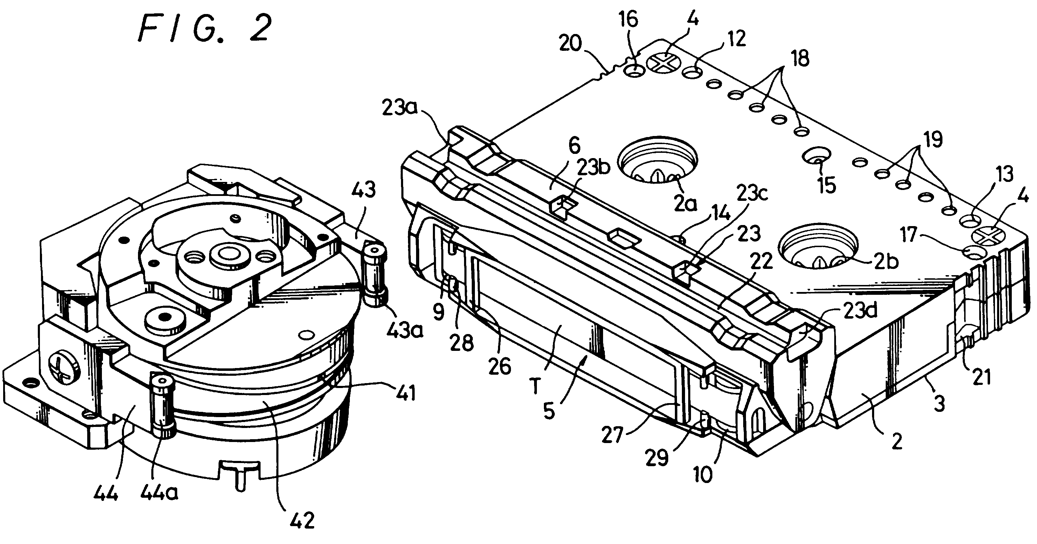

As illustrated in Figures 1 and 2, a changer engaging portion 23 is formed along a guide groove 22 extending along the lateral direction of the lid 6 which opens and closes the opening 5 of the cassette casing 1.

In this tape cassette, the magnetic tape T accommodated within the cassette casing 1 is recorded and/or reproduced by a rotary head of the helical scan system.

More specifically, as shown in Figure 2, a rotary head 41 is rotated at a predetermined slant angle relative to a head drum 42, and the head drum 42 is partly inserted into the opening 5 which has been opened by rotating the lid 6 in the upper or lower direction. The tape T extending across the opening 5 is wound around the insertion side peripheral surface of the head drum 42. Thus, when the rotary head 41 is rotated, oblique tracks are formed so as to cross the tape T.

In this embodiment, in order to ensure that tape T is brought into sliding contact with the head drum 41 in a helical fashion, as shown in Figure 3, a pair of tape guide members 24 and 25 whose guide portions are inclined in opposite direction are disposed in the insertion portion of the opening 5 at positions inside the guide rollers 9 and 10, such that they can be oscillated and moved in the lateral direction in an opposing fashion. When the head drum 42 is inserted into the opening 5, the tape guide members 24 and 25 come into contact with the peripheral surface of the head drum 42, and guide the tape T such that it is sandwiched between the tape guide members 24 and 25 and the peripheral surface of the head drum 42.

Moreover, as shown in Figure 2, the head drum 42 has at its side portions wing guides 43 and 44 which are inserted into the spaces between the pinch rollers 9 and 10 and the tape guide members 24 and 25 in respective side portions of the opening 5. Rollers 43a and 44a are mounted on the front end portions of the two wing guides 43 and 44, respectively and are brought into sliding contact with the tape T, urging the tape T against the tape guide members 24 and 25.

As shown in Figure 2, both the wing guides 43 and 44 are inserted into the opening 5 such that they are positioned in the spaces between supporting elements 26 and 27 provided near the inside of the opening 5 and tape projection preventing guide protrusions 28 and 29 positioned between the supporting elements 26 and 27 and the pinch rollers 9 and 10.

Because this tape cassette is so extremely small, there is a risk that if it is used alone, it may be lost. Thus, when not in use, a plurality of the tape cassettes are accommodated within a cassette magazine referred to in more detail below.

For this reason, the lid 6, which opens and closes the opening 5, is modified such that the tape cassette can be accurately accommodated within the cassette magazine and a desired tape cassette can be taken out therefrom with ease.

More specifically, the guide groove 22 provided on the front wall of the lid 6 is formed with a displacement towards one of the upper and lower sides (toward the lower side in this embodiment) from the central portion of the lid 6 in the lateral direction. The guide groove 22 is thus adapted to restrict the direction in which the tape cassette can be inserted into the cassette magazine, as will be described later.

The changer engaging portion 23 formed along the guide groove 22 is used to withdraw the tape cassette from the cassette magazine. In this embodiment, the engaging portion 23 comprises first to fourth cutaway concave portions 23a, 23b, 23c and 23d which are formed between the two end portions of the lid 6 along the guide groove 22 in the lateral direction. To be more specific, the first and fourth cutaway concave portions 23a and 23d are formed at left and right end portions of the front surface of the lid 6 so as to open at the side surfaces of the lid 6. Between the two cutaway concave portions 23a and 23d, the second and third cutaway concave portions 23b and 23c are formed at the front central portion of the lid 6. The four cutaway concave portions 23a, 23b, 23c and 23d are formed at a substantially equal spacing.

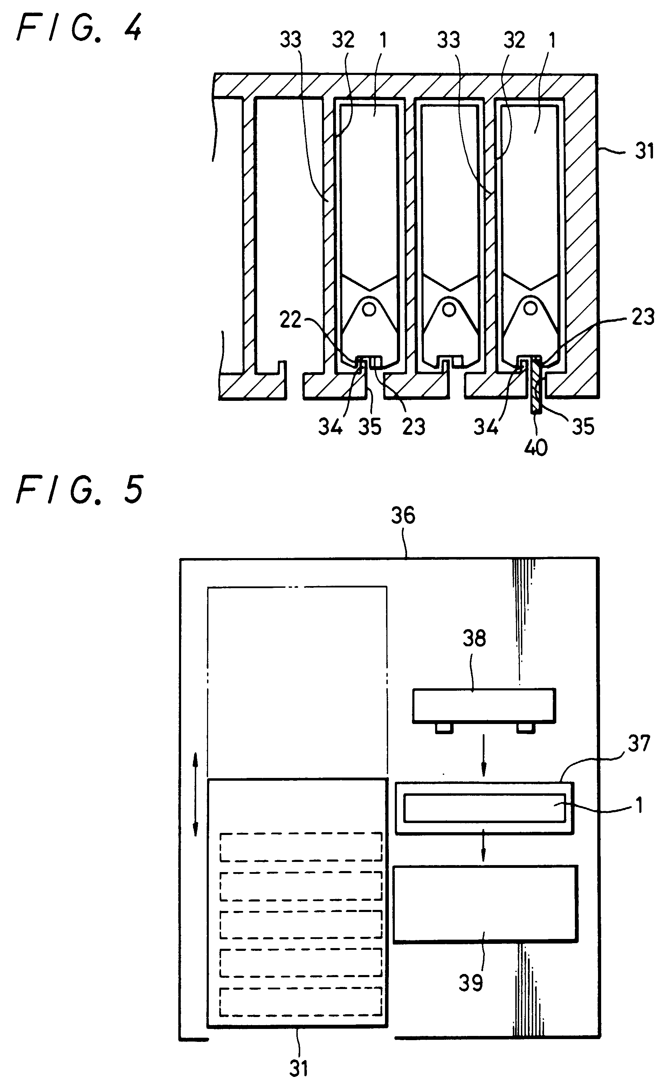

Figure 4 shows an example of a cassette magazine 31 which, is provided with a plurality of accommodating portions 32 into which the tape cassettes 1 are loaded in the lateral direction. The accommodating portions 32 are separated by respective partition walls 33. An engaging protrusion 34 is formed on the bottom portion of each of the accommodating portions 32 so as to extend in the depth direction. When a tape cassette 1 is accommodated within one of the accommodating portions 32, the guide groove 22 of the lid 6 is engaged with the engaging protrusion 34.

In the loading of one of the tape cassettes 1 into one of the accommodating portions 32 of the cassette magazine 31, because the guide groove 22 of the lid 6 deviates from the central portion of the lid 6, if the tape cassette is reversed and loaded into the accommodating portion 32 in the opposite direction, the guide groove 22 cannot be opposed to the engaging protrusion 34 accurately, so the tape cassette is prevented from being loaded into the accommodating portion 32 in the opposite direction.

A slit 35 is formed on the bottom portion of each of the accommodating portions 32 along the engaging protrusion 34, and a withdrawing arm of a cassette withdrawing apparatus, which will be referred to below, is inserted into the slit 35.

A plurality of magnetic tape cassettes accommodated within the thus constructed cassette magazine are loaded onto a recording and reproducing apparatus. Within the recording and reproducing apparatus, is a desired tape cassette changer system of the apparatus, so that recording and reproduction can be performed.

The cassette changer system of a recording and reproducing apparatus 36 will be explained with reference to Figure 5. When the cassette magazine 31 in which a plurality of tape cassettes are accommodated is inserted into the recording and reproducing apparatus 36, the cassette magazine 31 is moved by a predetermined moving mechanism (not shown) and one tape cassette is withdrawn from the designated accommodating portion 32 by a withdrawing apparatus 37. When the tape cassette is withdrawn from the cassette magazine 31, the tape cassette is carried to a driving mechanism section 39 by a moving apparatus 38 and loaded onto the driving mechanism section 39. In the driving mechanism section 39, the rotary head 41 is inserted into the opening 5 of the tape cassette, so recording or reproduction can be performed.

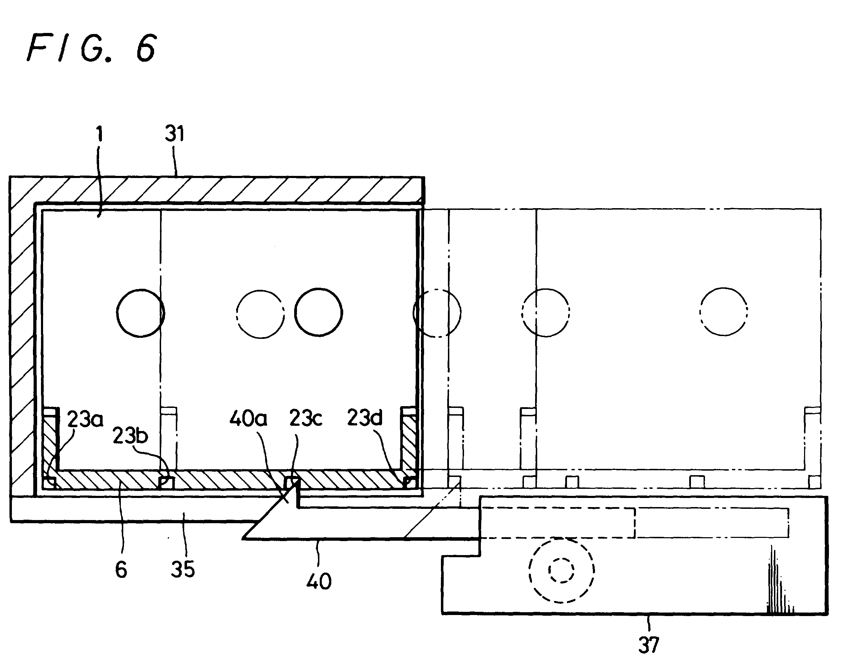

The cassette withdrawing apparatus 37 for withdrawing the tape cassette 1 from the cassette magazine 31 in the cassette changer system is arranged as shown in Figure 6. It is provided with a withdrawing arm 40, which has formed at a top portion thereof a ratchet-shaped engaging nail portion 40a which is engaged with the engaging portion 23 of the lid 6 only in the direction in which the tape cassette is withdrawn from the cassette magazine 31. When the cassette withdrawing arm 40 is reciprocated, the nail portion 40a is engaged with the engaging portion 23 of the tape cassette whereby the tape cassette is withdrawn from the cassette magazine 31.

The tape cassette can be withdrawn from the cassette magazine 31 by reciprocating the withdrawing arm 40 by a small stroke a plurality of times. More specifically, by the first reciprocation of the withdrawing arm 40, the nail portion 40a is engaged with the third cutaway concave portion 23c of the engaging portion 23 to withdraw the tape cassette from the cassette magazine 31 by about 1/3. By the second reciprocation of the withdrawing arm 40, the nail portion 40a is engaged with the second cutaway concave portion 23b of the engaging portion 23 to withdraw the tape cassette from the cassette magazine 31 by another 1/3. Then, in the third reciprocation of the withdrawing arm 40, the nail portion 40a is engaged with the first cutaway concave portion 23a of the engaging portion 23, whereby the tape cassette is wholly withdrawn from the cassette magazine 31.

The tape cassette thus withdrawn from the cassette magazine 31 is carried to the driving mechanism section 39 by the moving apparatus 38 of the cassette changer system, so that recording or reproduction can be performed.

In this tape cassette, since the engaging portion 23 to be engaged with the withdrawing arm 40 of the cassette changer is formed on the front surface of the lid 6, the tape cassette can be withdrawn from the cassette magazine 31 with ease, and can be applied to the cassette changer system.

The engaging portion 23 is formed with the plurality of cutaway concave portions 23a, 23b, 23c and 23d arranged in the lateral direction of the lid 6 at substantially equal spacing so that the stroke of one reciprocation of the withdrawing arm 40 can be reduced, thus making it possible to withdraw the tape cassette from the cassette magazine 31 using a plurality of strokes. Therefore, the withdrawing apparatus 37 can be miniaturized, which can make the overall cassette changer system small.

Since the engaging portion 23 is formed on the lid 6, the present invention can be applied to a standard magnetic tape cassette without large changes from a design standpoint.

More specifically, if the engaging portion 23 were provided in the side of the cassette casing 1 instead of in the lid 6, the magnetic tape accommodating space and the locations of various detection holes would need to be modified, because the space inside the cassette casing 1 is very restricted, and this would make design very difficult. In this embodiment, since the engaging portion 23 is provided in the vacant space on the front surface of the lid 6, the design of the cassette casing 1 is not affected, and the lid 6 needs only slight modification.

While the embodiment described is an extremely small magnetic tape cassette for recording a PCM signal, the present invention is not limited thereto and can be applied to a variety of tape cassettes, for example, a video tape cassette or a DAT cassette.

## Claims

1. A magnetic tape cassette which can be accommodated with a plurality of others in a cassette magazine (31) wherein the tape cassette is formed with an opening (5) at its front side so as to expose a tape (T) and is provided with a rotatable lid (6) which can open and close the opening (5); and
on a front surface of the lid (6), there is formed a guide groove (22) extending along the lateral direction of the lid (6);
characterised in that the lid (6) of the cassette has formed therein a plurality of concave changer member engaging portions (23a,23b,23c,23d) each communicating with the guide groove (22), extending in a direction perpendicular to the longitudinal direction of the guide groove (22) from one side of the guide groove toward an edge of the lid and spaced apart across the lateral width of the lid (6), whereby the tape cassette (1) can be stepwise withdrawn from the cassette magazine (31) by reciprocating a changer member (40) by a small stroke a plurality of times, said changer member engaging portions (23a,23b,23c,23d) being successively engaged by the cassette changer.

## Patentansprüche

1. Magnetbandkassette, die mit einer Vielzahl von weiteren Kassetten in einem Kassettenmagazin (31) aufgenommen werden kann,
wobei die Bandkassette mit einer Öffnung (5) an ihrer Frontseite derart ausgestattet ist, daß ein Band (T) freizulegen ist, und mit einer drehbaren Klappe (6) versehen ist, welche die Öffnung (5) öffnen und schließen kann,
und mit einer an einer Frontseite der Klappe (6) gebildeten Führungsnut (22), die sich längs der Querrichtung der Klappe (6) erstreckt,
**dadurch gekennzeichnet**,
daß in der Klappe (6) der Kassette eine Vielzahl von konkaven Wechslerglied-Eingriffsbereichen (23a, 23b, 23c, 23d) gebildet ist, die jeweils mit der Führungsnut (22) in Verbindung stehen, sich in einer Richtung rechtwinklig zur Längsrichtung der Führungsnut (22) von einer Seite der Führungsnut zu einer Kante der Klappe erstrecken und über die Querbreite der Klappe (6) in Abstand voneinander vorgesehen sind,
wobei die Bandkassette (1) aus dem Kassettenmagazin (31) durch häufiges in- und Herbewegen eines Wechslerteiles (40) um einen kleinen Hub schrittweise zurückgezogen werden kann und wobei die genannten Wechslerteil-Eingriffsbereiche (23, 23b, 23c, 23d) aufeinanderfolgend vom Kassettenwechsler erfaßt sind.

## Revendications

1. Cassette de bande magnétique qui peut être logée avec plusieurs autres dans un magasin de cassettes (31), où la cassette de bande est dotée d'une ouverture (5) au niveau de son côté antérieur, de façon à exposer une bande (T), et elle est dotée d'un couvercle toumant (6) qui peut ouvrir et fermer l'ouverture (5) ; et
sur une surface antérieure du couvercle (6), il est formé une rainure de guidage (22) qui s'étend suivant la direction latérale du couvercle (6) ;
caractérisée en ce que le couvercle (6) de la cassette est doté d'une pluralité de parties concaves (23a, 23b, 23c, 23d) destinées à être mises en prise avec un élément changeur, ces parties communiquant chacune avec la rainure de guidage (22), se prolongeant dans une direction perpendiculaire à la direction longitudinale de la rainure de guidage (22) en allant d'un côté de la rainure de guidage en direction d'un bord du couvercle, et étant mutuellement séparées sur la largeur latérale du couvercle (6), de sorte que la cassette de bande (1) peut être extraite par degrés hors du magasin de cassettes (31) par déplacement d'un élément changeur (40) suivant un mouvement de va-et-vient ayant une course de petite amplitude répétée plusieurs fois, lesdites parties (23a, 23b, 23c, 23d) destinées à être mises en prise avec l'élément changeur étant mises successivement en prise avec le changeur de cassette.
